# EUROPEAN PATENT APPLICATION

(11) **EP 4 752 073 A1**
(43) Date of publication of application: **03.06.2026**
(21) Application number: 24844464.8
(22) Date of filing: 18.06.2024
(51) Int. Cl.: B64U 50/30

(54) **MULTI-BATTERY-PACK POWER SUPPLY SYSTEM FOR UNMANNED AERIAL VEHICLE**

(30) Priority: 27.07.2023 CN 202310934828
(71) Applicant: Autoflight (Kunshan) Co., Ltd., Suzhou, Jiangsu 215345 (CN)
(72) Inventor: TIAN, Yu, Suzhou, Jiangsu 215345 (CN); WENG, Zhifu, Suzhou, Jiangsu 215345 (CN); GAO, Shangkun, Suzhou, Jiangsu 215345 (CN)
(74) Representative: MERH-IP Matias Erny Reichl Hoffmann Patentanwälte PartG mbB
(86) International application number: PCT/CN2024/099695
(87) International publication number: WO 2025/020769

(57) **Abstract**

The present invention relates to the technical field of power batteries and discloses a multi-pack battery power supply system for Unmanned Aerial Vehicles (UAVs). The multi-pack battery power supply system of the present invention comprises a plurality of N battery pack units connected in parallel, a pair of busbars, and a central control system. The N parallel-connected battery pack units are respectively connected to the pair of busbars, and the pair of busbars is further connected to each other via a charging port; the central control system performs data exchange with each of the N parallel-connected battery pack units respectively and controls the conduction or disconnection of the charging port to turn on or off the power supply system, enabling that the N parallel-connected battery pack units respectively supply power to an overall UAV load. By utilizing multiple independently operating battery packs in parallel, the present invention increases system redundancy, ensuring flight safety while simultaneously extending flight range.

## Description

### FIELD OF THE DISCLOSURE

The present invention relates to the field of power batteries, and particularly relates to a multi-pack battery power supply system for Unmanned Aerial Vehicles (UAVs).

### BACKGROUND OF THE INVENTION

In recent years, electricity has become increasingly important as a source of energy for driving aerial vehicles. In particular, eVTOL (Electric Vertical Take-Off and Landing) aircraft, known as "electric vertical take-off and landing aircraft", can effectively address the limitations of traditional commercial aviation, such as high infrastructure requirements, distance from city centers, inability to cover urban transit, and demanding pilot qualifications. Simultaneously, by bypassing ground traffic congestion and long-distance detours, eVTOLs will serve as the primary carrier for future Urban Air Mobility (UAM). For eVTOLs, the power supply system must provide sufficient energy during safe flight and landing processes to ensure the safety of the aircraft and of the passengers. Therefore, the battery system should possess an adequate safety margin.

### SUMMARY OF THE INVENTION

The objective of the present invention is to provide a multi-pack battery power supply system for UAVs. By utilizing multiple independently operating battery packs in parallel, the invention increases system redundancy, ensuring flight safety while simultaneously extending the flight range.

To solve the above technical problem, the present invention provides a UAV multi-pack battery power supply system, comprising: a plurality of N battery pack units connected in parallel, a pair of busbars, and a central control system; the N parallel-connected battery pack units are respectively connected to the pair of busbars, and the pair of busbars is further connected to each other via a charging port; the central control system performs data exchange with each of the N parallel-connected battery pack units respectively and controls the conduction or disconnection of the charging port to turn on or off the power supply system, enabling that the N parallel-connected battery pack units respectively supply power to an overall UAV load.

Further, the present invention provides an aircraft, comprising the UAV multi-pack battery power supply system.

Preferably, each of the battery pack units comprises a battery pack and a battery pack disconnection unit; the battery pack disconnection unit is connected to the battery pack; an input terminal of the battery pack and an output terminal of the battery pack disconnection unit are respectively connected to the pair of busbars; and the battery pack disconnection unit is configured to monitor the corresponding battery pack and cut off its connection with the other battery pack units when a fault occurs in the battery pack.

Preferably, each of the battery pack disconnection units is configured to monitor a plurality of status parameters of the corresponding battery pack; when any status parameter of any battery pack exceeds a threshold range, its connection with the other battery pack units is cut off; wherein the status parameters of the battery pack at least comprise a voltage, a current, an SOC (State of Charge), a voltage difference, a temperature, and an insulation status.

Preferably, a fuse unit is further provided between the battery pack and the battery pack disconnection unit; the fuse unit is configured to provide open-circuit protection for the corresponding battery pack disconnection unit in the event of a current overload.

Preferably, each of the battery pack units further comprises a power electronic control unit and a battery management system connected to each other and capable of exchanging data with each other; input terminals of the battery management system and of the power electronic control unit are respectively connected to the battery pack and to the battery pack disconnection unit, and output terminals of the power electronic control unit and of the battery management system are connected to the central control system; the battery management system and the power electronic control unit respectively monitor the battery pack and the battery pack disconnection unit and transmit monitored information to the central control system.

Preferably, the central control system comprises a master battery management system and an aircraft control system; the master battery management system is connected to each of the battery management systems, and the aircraft control system is connected to each of the power electronic control units; data exchange is performed between the master battery management system and the aircraft control system to turn on or off the power supply system by controlling the conduction or disconnection of the charging port.

Preferably, a charging disconnection unit is further connected between the pair of busbars; the charging disconnection unit is configured to monitor a plurality of charging status parameters of the charging port; when any charging status parameter exceeds a threshold range, the electrical connection between the pair of busbars is cut off; wherein the charging status parameters at least comprise a voltage and a current.

Preferably, the master battery management system performs data exchange with the charging disconnection unit to monitor the electrical connection between the pair of busbars.

Preferably, the fuse unit is a fuse.

By utilizing multiple independently operating battery packs in parallel, the present invention increases system redundancy, ensuring flight safety while simultaneously extending flight range.

### BRIEF DESCRIPTION OF DRAWINGS

FIG. 1 shows a block diagram of a UAV multi-pack battery power supply system according to an embodiment of the present invention.
FIG. 2 shows a specific block diagram of a UAV multi-pack battery power supply system according to an embodiment of the present invention.

### DETAILED DESCRIPTION

The following embodiments further illustrate the technical solutions of the present invention. It can be understood that the specific embodiments described herein are only used to explain the present invention. Additionally, it should be noted that, for ease of description, the drawings only show parts related to the present invention and not all parts.

In the description of the present invention, unless otherwise specified, terms such as "install", "connect", and "attach" should be interpreted broadly. For example, connections may be fixed or detachable, mechanical or electrical, direct or indirect via intermediate components, or internal connections between two elements. Those skilled in the art can understand the specific meanings of these terms in the present invention based on the context.

In the present invention, unless otherwise specified and defined, the first feature being "on" or "under" the second feature may include the first and second features being in direct contact, or may include the first and second features not being in direct contact but being in contact through additional features between them. Moreover, the first feature being "on", "above", or "over" the second feature includes the first feature being directly above or obliquely above the second feature, or merely indicates that the horizontal height of the first feature is higher than that of the second feature. The first feature being "under", "below", or "beneath" the second feature includes the first feature being directly below or obliquely below the second feature, or merely indicates that the horizontal height of the first feature is lower than that of the second feature.

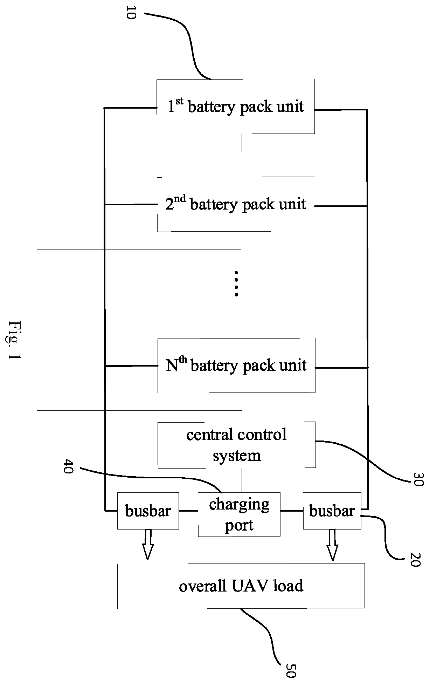

Embodiments of the present invention are described below with reference to the accompanying drawings. As shown in Figure 1, the UAV multi-pack battery power supply system of the embodiment of the present invention comprises: a plurality of N battery pack units 10 connected in parallel, a pair of busbars 20, and a central control system 30. The N parallel-connected battery pack units 10 are respectively connected to the pair of busbars 20, and the pair of busbars 20 is further connected to each other via a charging port 40. The central control system 30 performs data exchange with each of the N parallel-connected battery pack units 10 respectively and controls the power supply system to turn on or off by managing the conduction or disconnection of the charging port 40, enabling that the N parallel-connected battery pack units 10 respectively supply power to an overall UAV load 50.

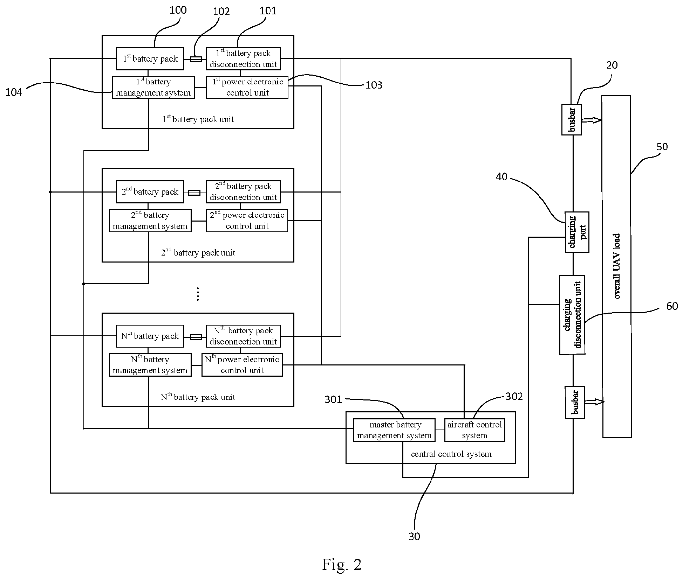

Specifically, as shown in FIG. 2, each battery pack unit 10 includes a battery pack 100 and a battery pack disconnection unit 101. The battery pack disconnection unit 101 is connected to the battery pack 100. The input terminal of the battery pack 100 and the output terminal of the battery pack disconnection unit 101 are respectively connected to the pair of busbars 20. The battery pack disconnection unit 101 is configured to monitor the corresponding battery pack 100 and, when a fault occurs in the battery pack 100, cut off its connection with the other battery pack units 10. Each battery pack disconnection unit 101 is configured to collect a plurality of status parameters of the battery pack 100 to monitor the health status of the corresponding battery pack 100. When any status parameter of any battery pack 100 exceeds a preset threshold range, its connection with the other battery pack units 10 is cut off, thereby cutting off the charging circuit. The status parameters include, but are not limited to: voltage, current, SOC (State of Charge), voltage difference, temperature, and insulation status. Further, a fuse unit 102 is provided between the battery pack 100 and the battery pack disconnection unit 101. The fuse unit 102 is configured to provide open-circuit protection for the corresponding battery pack disconnection unit 101 in the event of a current overload. Each battery pack unit 10 further includes a power electronic control unit 103 and a battery management system 104 connected to each other, wherein the power electronic control unit 103 and the battery management system 104 are capable of exchanging data with each other. The input terminals of the battery management system 104 and of the power electronic control unit 103 are respectively connected to the battery pack 100 and to the battery pack disconnection unit 101, and the output terminals of the power electronic control unit 103 and of the battery management system 104 are connected to the central control system 30. The battery management system 104 and the power electronic control unit 103 respectively monitor the battery pack 100 and the battery pack disconnection unit 101, and transmit the monitored information to the central control system 30. Further, the central control system 30 includes a master battery management system 301 and an aircraft control system 302. The master battery management system 301 is connected to each of the battery management systems 104, and the aircraft control system 302 is connected to each of the power electronic control units 103.The master battery management system 301 collects battery pack unit monitoring data from each battery management system 104 and transmits the collected data to the aircraft control system 302. The aircraft control system 302 executes corresponding instructions based on the received data, such as issuing warnings to a ground station, withholding power-on operations, and controlling the power-off of corresponding faulty battery pack units. After data exchange between the master battery management system 301 and the aircraft control system 302, the battery system can also be connected to a ground charging pile by controlling the charging port 40 for the purpose of charging the battery system. During the charging process, the master battery management system 301 interacts with the ground charging pile to control the charging procedure. Further, a charging disconnection unit 60 is connected between the pair of busbars 20. The charging disconnection unit 60 is configured to collect charging current information to monitor a plurality of charging status parameters of the charging port 40. When any of its charging status parameters exceed a preset threshold range, the electrical connection between the pair of busbars 20 is cut off. The charging status parameters include, but are not limited to, voltage and current. In addition, the master battery management system 301 performs data exchange with the charging disconnection unit 60 to monitor the electrical connection between the pair of busbars 20. The fuse unit 102 is a fuse. Preferably, N is greater than 2. That is, three or more battery packs should be connected in parallel for power supply. The present invention utilizes N independently operating battery packs in parallel to increase system redundancy, ensuring flight safety while simultaneously extending the flight range.

The present invention further provides an aircraft, comprising the aforementioned UAV multi-pack battery power supply system. The UAV multi-pack battery power supply system of the present invention utilizes a plurality of N independently operating battery packs in parallel to increase system redundancy, ensuring flight safety while simultaneously extending the flight range.

The above embodiments are only illustrative of the principles and effects of the present invention. Anyone skilled in the art may modify or change the above embodiments without departing from the purpose of the present invention. Therefore, all equivalent modifications or changes made by those skilled in the art without departing from the disclosed purpose of the present invention shall fall within the scope of the claims of the present invention.

## Claims

1. A UAV multi-pack battery power supply system, comprising: a plurality of N battery pack units (10) connected in parallel, a pair of busbars (20), and a central control system (30); the N parallel-connected battery pack units (10) are respectively connected to the pair of busbars (20), and the pair of busbars (20) is further connected to each other via a charging port (40); the central control system (30) performs data exchange with each of the N parallel-connected battery pack units (10) respectively and controls the conduction or disconnection of the charging port (40) to turn on or off the power supply system, enabling that the N parallel-connected battery pack units (10) respectively supply power to an overall UAV load (50).

2. The UAV multi-pack battery power supply system according to claim 1, wherein each of the battery pack units (10) comprises a battery pack (100) and a battery pack disconnection unit (101); the battery pack disconnection unit (101) is connected to the battery pack (100); an input terminal of the battery pack (100) and an output terminal of the battery pack disconnection unit (101) are respectively connected to the pair of busbars (20); and the battery pack disconnection unit (101) is configured to monitor the corresponding battery pack (100) and to cut off its connection with the other battery pack units (10) when a fault occurs in the battery pack (100).

3. The UAV multi-pack battery power supply system according to claim 2, wherein each of the battery pack disconnection units (101) is configured to monitor a plurality of status parameters of the corresponding battery pack (100); when any status parameter of any battery pack (100) exceeds a threshold range, its connection with the other battery pack units (10) is cut off; wherein the status parameters of the battery pack (100) at least comprise a voltage, a current, an SOC (State of Charge), a voltage difference, a temperature, and an insulation status.

4. The UAV multi-pack battery power supply system according to claim 2, wherein a fuse unit (102) is further provided between the battery pack (100) and the battery pack disconnection unit (101); the fuse unit (102) is configured to provide open-circuit protection for the corresponding battery pack disconnection unit (101) in the event of a current overload.

5. The UAV multi-pack battery power supply system according to claim 1, wherein each of the battery pack units (10) further comprises a power electronic control unit (103) and a battery management system (104) connected to each other and capable of exchanging data with each other; input terminals of the battery management system (104) and of the power electronic control unit (103) are respectively connected to the battery pack (100) and to the battery pack disconnection unit (101), and output terminals of the power electronic control unit (103) and of the battery management system (104) are connected to the central control system (30); the battery management system (104) and the power electronic control unit (103) respectively monitor the battery pack (100) and the battery pack disconnection unit (101) and transmit monitored information to the central control system (30).

6. The UAV multi-pack battery power supply system according to claim 5, wherein the central control system (30) comprises a master battery management system (301) and an aircraft control system (302); the master battery management system (301) is connected to each of the battery management systems (104), and the aircraft control system (302) is connected to each of the power electronic control units (103); data exchange is performed between the master battery management system (301) and the aircraft control system (302) to turn on or off the power supply system by controlling the conduction or disconnection of the charging port (40).

7. The UAV multi-pack battery power supply system according to claim 1, wherein a charging disconnection unit (60) is further connected between the pair of busbars (20); the charging disconnection unit (60) is configured to monitor a plurality of charging status parameters of the charging port (40); when any charging status parameter exceeds a threshold range, the electrical connection between the pair of busbars (20) is cut off; wherein the charging status parameters at least comprise a voltage and a current.

8. The UAV multi-pack battery power supply system according to claim 2, wherein the master battery management system (301) performs data exchange with the charging disconnection unit (60) to monitor the electrical connection between the pair of busbars (20).

9. The UAV multi-pack battery power supply system according to claim 4, wherein the fuse unit (102) is a fuse.

10. An aircraft, comprising the UAV multi-pack battery power supply system according to any one of claims 1 to 9.
